# EUROPÄISCHE PATENTSCHRIFT

(11) **EP 1 885 559 B1**
(45) Veröffentlichungstag und Bekanntmachung des Hinweises auf die Patenterteilung: **18.07.2012**
(21) Anmeldenummer: 06763176.2
(22) Anmeldetag: 17.05.2006
(51) Int. Cl.: B32B 27/32

(54) **POLYPROPYLENFOLIE FÜR ESH-ANWENDUNGEN**
POLYPROPYLENE FILM FOR ELECTRON-BEAM HARDENING APPLICATIONS
FILM DE POLYPROPYLENE POUR APPLICATIONS DE DURCISSAGE PAR FAISCEAU ELECTRONIQUE

(30) Priorität: 18.05.2005 DE 102005023568
(43) Veröffentlichungstag der Anmeldung: 13.02.2008
(73) Patentinhaber: Treofan Germany GmbH & Co.KG, 66539 Neunkirchen (DE)
(72) Erfinder: TEWS, Wilfrid, 66894 Bechhofen (DE); HECK, Maria, 66299 Bildstock (DE)
(74) Vertreter: Mai, Dörr, Besier
(86) Internationale Anmeldenummer: PCT/EP2006/062395
(87) Internationale Veröffentlichungsnummer: WO 2006/122958

(56) Entgegenhaltungen:
- EP-A- 0 236 714
- EP-A- 0 695 777
- EP-A- 0 781 652
- DE-A1- 3 513 526

## Beschreibung

Polypropylenfolie für ESH-Anwendungen

Die vorliegende Erfindung betrifft die Verwendung einer opaken Polypropylenfolie in einem VFFS Verfahren.

Biaxial orientierte Polypropylenfolien (boPP) werden heute als Verpackungsfolien in den verschiedensten Anwendungen eingesetzt. Polypropylenfolien zeichnen sich durch viele vorteilhafte Gebrauchseigenschaften wie eine hohe Transparenz, Glanz, Barriere gegen Wasserdampf, gute Bedruckbarkeit, Steifigkeit, Durchstoßfestigkeit etc. aus. Neben den transparenten Folien haben sich opake Polypropylenfolien in den vergangenen Jahren sehr erfolgreich entwickelt. Zum einen ist die besondere Optik (Opazität und Weißgrad) dieser Folien für einige Anwendungen besonders wünschenswert. Zum anderen bieten opake Folien dem Anwender eine höhere Ausbeute auf Grund der reduzierten Dichte dieser Folien.

Trotz dieser Vielfalt günstiger Eigenschaften muß die Polypropylenfolie häufig mit anderen Materialien kombiniert werden, um bestimmte Defizite auszugleichen. Für viele Anwendungen werden verschiedene Eigenschaften gefordert, die nicht alle an einer einzigen Folie realisiert werden können. Aus diesem Grund fügt man häufig verschiedene Folientypen zu einem sogenannten Laminat zusammen. Für die Laminierung werden Klebstoffe oder Haftvermittler benötigt, die dafür sorgen, daß die laminierten Folien ausreichend fest aneinander haften.

Häufig erfolgt auch eine Beschichtung oder Lackierung der Basisfolie, um die gewünschten Gebrauchseigenschaften sicherzustellen. Beschichtungen verbessern beispielsweise die Kratzfestigkeiten, den Glanz oder die Barriereeigenschaften der Folien oder verleihen bessere oder andere Siegeleigenschaften, beispielsweise durch Kaltsiegelkleber.

Wesentlich bei der Veredlung der Grundfolie zur Verpackung ist die Bedruckung der Folie. Viele Druckverfahren kommen mittlerweile zum Einsatz. In einigen Anwendungen muß der Druck durch Kaschierung gegen eine transparente Folie oder durch einen Überlack geschützt werden, wodurch gegebenenfalls auch der Kontakt zwischen Druckfarbe und Füllgut unterbunden wird.

Bei allen diesen Verarbeitungsschritte, wie Laminieren, Kaschieren, Lackieren, Bedrucken, Beschichten, ist es wesentlich, daß eine gute Haftung zwischen den verschiedenen Materialien sichergestellt ist. Daher kommen bei verschiedenen Verarbeitungsverfahren verschiedene Techniken und Hilfsmittel zum Einsatz, welche die Haftung verbessern sollen. Beispielsweise sind beim Laminieren oder Kaschieren Kleber erforderlich, vor der Beschichtung wird oft zunächst ein Primer aufgetragen. Nach dem Aufbringen einer Lack- oder Druckschicht ist es erforderlich diese Lack- oder Druck-Schichten zu trocknen oder zu vernetzen. Gleiches gilt für Kleber und Primer-Schichten,

Grundfolie und Verarbeitungsverfahren müssen aufeinander abgestimmt sein, so daß am Ende der Veredlungskette eine Verpackung resultiert, welche den hohen optischen und technischen Anforderungen genügt.

In jüngster Zeit wurden neue Verfahren zur Aushärtung und Trocknung von Druckfarben, Lackierung und Kleberschichten entwickelt, beispielsweise die UV- und Elektronenstrahlhärtung. Die UV Härtung ist ein photochemischer Prozeß, bei dem durch Photoinitiatoren unter Einfluß von UV-Licht Druckfarben und Bindemittel innerhalb von wenigen Sekunden einen trocknen festen Farbfilm bilden. Im Gegensatz zu konventionellen Systemen gibt es keine Verdampfungen von Lösemitteln oder Verdünnungsmittel. Alle Komponenten sind an der Reaktion beteiligt. Dies macht UV-Härtung zu einer sehr sauberen Technologie.

Als Alternative hierzu gibt es inzwischen auch Verfahren bei denen die Härtung oder Trocknung von Schichten mittels Elektronen ausgelöst wird, die sogenannte Elektronenstrahlhärtungen (EHS). Dieses Verfahren bietet neue Möglichkeiten zur Härtung oder Trocknung von lösemittelfreien Druckfarben, Beschichtungen, Lacken und Kaschierklebern, die keine Photoinitiatoren enthalten. Damit eröffnen sich neue Möglichkeiten im Bereich der Flexo- und Offsetdruckfarben als Alternative zu wässrigen und UV-Druckfarben, sowie zur Härtung von Überlackierungen, die teilweise die Glanzkaschierung ersetzen können.

Die Energie der Elektronen beim Elektronenstrahlhärten kann variieren und bestimmt die Eindringtiefe in das Material und damit die Dicke der Beschichtung, die gehärtet oder getrocknet werden kann. Problematisch sind bei diesen ESH-Verfahren unerwünschte Wechselwirkungen mit dem Trägermaterial. Im allgemeinen läßt sich bei der Bestrahlung die Eindringtiefe der Elektronen nicht so genau kontrollieren, daß ein Eindringen der Elektronen in das Trägermaterial vollständig verhindert werden kann. Dadurch kann es zu Vernetzungsreaktionen in dem Trägermaterial kommen, manchmal resultieren Vergilbungen, Versprödungen oder Festigkeitseinbußen.

Ähnliche negative Wechselwirkungen zwischen energiereicher Strahlung und den Gebrauchseigenschaften sind auch im Bereich der oPP-Folien bekannt. Zur Erhöhung der Oberflächenspannung wird die Folienoberfläche mit Ionen "beschossen", die durch eine elektrische Entladung (Coronabehandlung) oder durch Flammionisation der Umgebung erzeugt werden. Hierbei kommt es häufig zu einem direkten Einfluß auf das Polymere der Folienschichten. Zusätzlich beeinflußen auch Wechselwirkungen zwischen Additiven, Polymeren und Strahlungen die Eigenschaften der Folien. So ist es beispielsweise bekannt, daß Flammbehandlungsverfahren die Siegelfähigkeit einer oPP-Folie stark beeinträchtigen. Auch die negative Wechselwirkung von Corona-Strahlung auf Silikonöl-haltige Folien gehört inzwischen zum allgemeinen Fachwissen. Hier kommt es durch Vernetzungsreaktionen gleichfalls zum Verlust der Siegel- und Hot- Tackeigenschaften der Folie.

Des weiteren ist es bekannt, daß der Hot-Tack von boPP-folien durch Elektronenstrahl-Behandlungen schwerwiegend beeinträchtigt wird. Der Hot-Tack von Folien ist eine wesentliche Eigenschaften bei der Verwendung der Folie auf vertikalen Form-Füll-Schließ-Machinen (VFFS). Leider wird der Hot-Tack teilweise so stark beeinträchtigt, daß nach ESH die Verwendung der Folie in den VFFS-Verfahren nicht mehr möglich ist. Nach dem Stand der Technik versucht man dieses Problem durch Bestrahlung mit niederenergetischen Elektronen oder durch geringere Dosen zu lösen. Alternativ wird auch nach neuen oder stabilisierten Siegelrohstoffen gesucht, welche durch Elektronenbestrahlung nicht mehr beeinflusst werden (I. Rangwalla ESI US Wilmington "Influence of Electron Beam on some Polymeric Substrates used in Flexible Packaging 29. Münchner Klebstoff und Veredlungssymposium 2004; S. 113 - 116).

Es war daher Aufgabe der vorliegenden Erfindung ein Folienmaterial zur Verfügung zu stellen, welches in Elektronenstrahlverfahren zur Trocknung oder Aushärtung von zusätzlichen Schichten eingesetzt werden kann, ohne daß dabei wichtige Gebrauchseigenschaften des Trägermaterials beeinträchtigt werden. Insbesondere soll das beschichtet oder bedruckte und mittels Elektronenstrahl getrocknete oder gehärtete Folienprodukt für Siegel- und Hot Tack-Anwendungen einsetzbar sein.

Die der Erfindung zugrundeliegende Aufgabe wird gelöst durch die Verwendung einer coextrudierten mehrschichtigen, biaxial orientierten Polypropylenmehrschicht□folie in Elektronenstrahlhärtung, welche mindestens eine erste siegelfähige Deckschicht und eine vakuolenhaltigen Schicht mit einer Dicke von mindestens 5µm aufweist.

Die vakuolenhaltige Schicht der Folie ist im allgemeinen die Basisschicht oder eine Zwischenschicht der Folie. Gegebenfalls können auch beidseitig vakuolenhaltige Zwischenschichten vorhanden sein, die als zusätzliche Option mit einer vakuolenhaltigen Basisschicht kombiniert werden können.

Überraschenderweise verhindert die opake vakuolenhaltige Schicht eine Beschädigung der Siegelschicht bei Elektronenstrahlhärtung, so daß Siegel□eigenschaften und insbesondere der Hottack der Folie sehr gut sind. Es können überraschend hohe Bestrahlungsintensitäten bzw. Energien gewählt werden, ohne daß der Hot-Tack der Folie verschlechtert wird.

Der Vergleich zu transparenten oder weißen, nur mit TiO2 eingefärbten, Folien zeigt, daß die Siegelschichten durch die Elektronenstrahlen geschädigt werden. Mit steigendem Energieeintrag durch die Elektronenbestrahlung werden bei diesen Folien die Hot Tack Werte der Folie immer schlechter.

Im Sinne der vorliegenden Erfindung ist die Basisschicht diejenige Schicht der Folie welche mindestens 40%, vorzugsweise mehr als 50% der Gesamtdicke der Folie ausmacht. In einer möglichen Ausführungsform kann die erste Deckschicht direkt auf der Basisschicht aufgebracht sein. In einer weiteren Ausführungsform können zusätzlich zwischen dieser ersten siegelfähige Deckschicht und der Basisschicht weitere Schichten angebracht sein, welche dann eine oder mehrere erste Zwischenschicht/en bilden. Deckschichten sind im Sinne der vorliegenden Erfindung die Außenschichten der coextrudierten Folie. Eine zweite optionale Deckschicht auf der gegenüberliegenden Seite der Basisschicht kann unmittelbar auf der Basisschicht aufgebracht sein. Es sind auch Ausführungsformen möglich bei denen beide Deckschichten auf Zwischenschichten der Folie aufgebracht sind. Folien im Sinne der vorliegenden Erfindung können somit grundsätzlich 2 bis 7-schichtige Ausführungsformen umfassen. Wesentlich ist, daß der Folienaufbau mindestens eine vakuolenhaltige Schicht und mindestens eine siegelfähige Deckschicht umfaßt.

Die erfindungsgemäße opake Folie zeichnet sich durch hervorragende Hot Tack Werte nach Elektronenbestrahlung aus, welche sich an transparenten oder weißen Folien mit vergleichbarem Aufbau nicht realisieren lassen. Es ist insbesondere sehr überraschend, daß die Hot-Tack Werte vor und nach Elektronenbestrahlung nahezu unverändert sind, wohingegen die Hot-Tack Werte bei den transparenten und weißen Folien nach der Bestrahlung deutlich schlechter sind als vor der Bestrahlung.

Die erste, siegelfähige, coextrudierte Deckschicht der opaken Folie ist im allgemeinen aus üblichen siegelfähigen olefinischen Polymerisaten aufgebaut, beispielsweise aus Ethylen- oder Propylenpolymerisaten. Im allgemeinen enthält die siegelfähige, erste Deckschicht mindestens 80 Gew.-%, vorzugsweise 85 bis <100 Gew.-%, insbesondere 95 bis 99 Gew.-% der genannten Polymeren oder Mischungen aus diesen, sowie gegebenenfalls übliche Additive in jeweils wirksamen Mengen.

Propylenpolymere sind Mischpolymerisate die überwiegend Propyleneinheiten enthalten. Propylenco- oder Terpolymere sind im allgemeinen aus mindestens 50 Gew.-% Propylen und Ethylen und/oder Butyleneinheiten als Comonomer aufgebaut. Bevorzugte Mischpolymerisate für die siegelfähige Deckschicht sind statistische Ethylen-Propylen-Copolymere mit einem Ethylengehalt von 2 bis 10 Gew.-%, bevorzugt 5 bis 8 Gew.-%, oder statistische Propylen-Butylen-1-Copolymere mit einem Butylengehalt von 4 bis 25 Gew.-%, bevorzugt 10 bis 20 Gew.-%, je□weils bezogen auf das Gesamtgewicht des Copolymeren, oder statistische Ethylen-Propylen-Butylen-1-Terpolymere mit einem Ethylenge□halt von 1 bis 10 Gew.-%, bevorzugt 2 bis 6 Gew.-%, und einem Butylen-1-Gehalt von 3 bis 20 Gew.-%, bevor□zugt 8 bis 10 Gew.-%, jeweils bezogen auf das Gesamtgewicht des Terpo□lyme□ren. Diese Co- und Terpolymeren haben im allgemeinen einen Schmelzflußindex von 3 bis 15 g/10min, vorzugsweise 3 bis 9 g/10min (230°C, 21,6N DIN 53735) und einen Schmelzpunkt von 70 bis 145°C, vorzugsweise 90 bis 140°C (DSC).

Geeignete Polyethylene sind beispielsweise HDPE, MDPE, LDPE, LLDPE, VLDPE worunter HDPE und MDPE Typen besonders bevorzugt sind. Das HDPE hat im allgemeinen einen MFI (50 N/190 C) von größer 0,1 bis 50 g/10 min, vorzugsweise 0,6 bis 20 g/10min, gemessen nach DIN 53 735 und eine Viskositätszahl, gemessen nach DIN 53728, Teil 4, oder ISO 1191, im Bereich von 100 bis 450 cm³/g, vorzugsweise 120 bis 280 cm³/g. Die Kristallinität beträgt 35 bis 80 %, vorzugsweise 50 bis 80 %. Die Dichte, gemessen bei 23 C nach DIN 53479, Verfahren A, oder ISO 1183, liegt im Bereich von >0,94 bis 0,96 g/cm³. Der Schmelzpunkt, gemessen mit DSC (Maximum der Schmelzkurve, Aufheizgeschwindigkeit 20 C/min), liegt zwischen 120 und 140 C. Geeignetes MDPE hat im allgemeinen einen MFI (50 N/190 C) von größer 0,1 bis 50 g/10 min, vorzugsweise 0,6 bis 20 g/10min, gemessen nach DIN 53735. Die Dichte, gemessen bei 23 C nach DIN 53479, Verfahren A, oder ISO 1183, liegt im Bereich von >0,925 bis 0,94g/cm³. Der Schmelzpunkt, gemessen mit DSC (Maximum der Schmelzkurve, Aufheizgeschwindigkeit 20 C/min), liegt zwischen 115 und 130 C.

Neben den, vorstehend beschriebenen, Polymeren kann die erste siegelfähige Deckschicht übliche Additive wie Gleitmittel, Antistatika, Antiblockmittel, Stabilisatoren und/oder Neutralisationsmittel in jeweils wirksamen Mengen enthalten. Zur Verbesserung der Hafteigenschaften oder Bedruckbarkeit kann die Oberfläche der ersten Deckschicht in an sich bekannter Weise mittels Corona, Flamme oder Plasma einem Verfahren zur Erhöhung der Oberflächenspannung unterworfen. Typischerweise liegt dann die Oberflächenspannung der so behandelten Deckschicht in einem Bereich von 35 bis 45 mN/m. Vorbehandlung und Additivierung müssen so aufeinander abgestimmt sein, daß die Siegel- und Hot-Tack-Eigenschaften nicht negativ beeinflußt werden.

Es ist erfindungswesentlich, daß die Folie mindestens eine Schicht, gegebenenfalls mehrere Schichten mit Vakuolen enthält. Diese Vakuolen verleihen der Folie ein opakes Aussehen und reduzieren die Dichte der Folie gegenüber der Dichte der Ausgangsstoffe. "Opake Folie" bedeutet im Sinne der vorliegenden Erfindung eine vakuolenhaltige Folie, deren Lichtdurchlässigkeit (ASTM-D 1003-77) höchstens 70%, vorzugsweise höchstens 50 %, beträgt.

Die vakuolenhaltige Schicht enthält Polyolefin, vorzugsweise ein Propylenpolymer und vakuoleninitierende Füllstoffe sowie gegebenenfalls weitere übliche Additive in jeweils wirksamen Mengen. Im allgemeinen enthält die vakuolenhaltige Schicht mindestens 70 Gew.-%, vorzugsweise 75 bis 98 Gew.-%, insbesondere 85 bis 95 Gew.-%, des Polyolefins, jeweils bezogen auf das Gewicht der Schicht. In einer weiteren Ausführungsform kann die vakuolenhaltige Schicht zusätzlich zu den vakuoleninitierenden Füllstoffen Pigmente, insbesondere TiO₂ enthalten.

Als Polyolefine der vakuolenhaltige Schicht sind Propylenpolymere bevorzugt. Diese Propylenpolymeren enthalten 90 bis 100 Gew.-%, vorzugsweise 95 bis 100 Gew.-%, insbesondere 98 bis 100 Gew.-%, Propyleneinheiten und besitzen einen Schmelzpunkt von 120°C oder höher, vorzugsweise 150 bis 170°C, und im allgemeinen einen Schmelzflußindex von 1 bis 10 g/10 min, vorzugsweise 2 bis 8 g/10 min, bei 230°C und einer Kraft von 21,6 N (DIN 53735). Isotaktisches Propylenhomopolymer mit einem ataktischen Anteil von 15 Gew.-% und weniger, Copolymere von Ethylen und Propylen mit einem Ethylengehalt von 5 Gew.-% oder weniger, Copolymere von Propylen mit C₄-C₈-Olefinen mit einem Olefingehalt von 5 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die vakuolenhaltige Schicht dar, wobei isotaktisches Propylenhomopolymer besonders bevorzugt ist. Die angegebenen Gewichts□prozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, MDPE, LDPE, VLDPE und LLDPE, wobei der Anteil dieser Polyolefine jeweils 15 Gew.-%, bezogen auf die Polymermischung, nicht übersteigt.

Die opake vakuolenhaltige Schicht der Folie enthält vakuoleninitierende Füllstoffe im allgemeinen in einer Menge von maximal 30 Gew.-%, vorzugsweise 2 bis 25 Gew.-%, insbesondere 2 bis 15 Gew.-%, bezogen auf das Gewicht der vakuolenhaltige Schicht.

Im Sinne der vorliegenden Erfindung sind vakuoleniniziierende Füllstoffe feste Teilchen, die mit der Polymermatrix unverträglich sind und beim Verstrecken der Folie zur Bildung von vakuolenartigen Hohlräumen führen, wobei Größe, Art und Anzahl der Vakuolen von der Menge und der Größe der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. In der Regel haben die vakuoleniniziierenden Füllstoffe eine Mindestgröße von 1 µm, um zu einer effektiven, d.h. opak machenden Menge an Vakuolen zu führen. Im allgemeinen beträgt der mittlere Teilchendurchmesser der Teilchen 1 bis 6 µm, vorzugsweise 1 bis 4 µm. Der chemische Charakter der Teilchen spielt eine untergeordnete Rolle.

Übliche vakuoleniniziierende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere Copolymere von cyclischen Olefinen (COC) wie in EP-A-0623 463 beschrieben, Polyester, Polystyrole, Polyamide, halogenierte organische Polymere, wobei Polyester wie beispielsweise Polybutylenterephthalate und Cycloolefincopolymere bevorzugt sind. Unverträgliche Materialien bzw. unverträgliche Polymere im Sinne der vorliegenden Erfindung bedeutet, daß das Material bzw. das Polymere in der Folie als separates Teilchen bzw. als separate Phase vorliegt.

In einer weiteren Ausführungsform kann die vakuolenhaltige Schicht zusätzlich Pigmente enthalten, beispielsweise in einer Menge von 0,5 bis 10 Gew.-%, vorzugsweise 1 bis 8 Gew.-%, insbesondere 1 bis 5 Gew.-%. Die Angaben beziehen sich auf das Gewicht der vakuolenhaltigen Schicht.

Pigmente sind im Sinne der vorliegenden Erfindung unverträgliche Teilchen, die im wesentlichen nicht zur Vakuolenbildung beim Verstrecken der Folie führen. Die färbende Wirkung der Pigmente wird durch die Teilchen selbst verursacht. Der Begriff "Pigmente" ist im allgemeinen an einen mittleren Teilchendurchmesser im Bereich von 0,01 bis maximal 1 µm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 µm, vorzugsweise 0,01 bis 0,7 µm , insbesondere 0,01 bis 0,4 µm.

Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolin-Ton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden. Titandioxid ist besonders bevorzugt. Verschiedene Modifikationen und Beschichtungen von TiO₂ sind an sich im Stand der Technik bekannt.

Die Dichte der Folie wird wesentlich von der Dichte der vakuolenhaltige Schicht bestimmt. Die Dichte der vakuolenhaltigen Schicht, wird im allgemeinen durch die Vakuolen reduziert sein, sofern nicht größere Mengen an TiO₂ den dichtereduzierenden Effekt der Vakuolen kompensieren. Im allgemeinen liegt die Dichte der opaken vakuolenhaltige Schicht in einem Bereich von 0,45 - 0,85g/cm³. Die Dichte der Folie kann für die verschiedenen Ausführungsformen in einem größeren Bereich variieren und liegt im allgemeinen in einem Bereich von 0,5 bis 0,95g/cm³, vorzugsweise 0,6 bis 0,9g/cm³. Die Dichte wird grundsätzlich durch Zusatz von TiO₂ erhöht, aber gleichzeitig durch die vakuoleninitierenden Füllstoffe in der vakuolenhaltige Schicht erniedrigt. Für eine vakuolenhaltige Schicht, welche kein dichteerhöhendes TiO2 enthält liegt die Dichte der opaken vakuolenhaltige Schicht vorzugsweise in einem Bereich von 0,45 bis 0,75 g/cm³, wohingegen für die weiß-opake vakuolenhaltige Schicht mit TiO2 der Bereich von 0,6 bis 0,9g/cm³ bevorzugt ist

Im allgemeinen ist es bevorzugt, daß die vorstehend beschrieben vakuolenhaltige Schicht die Basisschicht der Folie ist und dann eine Dicke von mindestens 10 bis 80µm, vorzugsweise 10 bis 60µm aufweist.

Alternativ kann die vakuolenhaltige Schicht auch eine Zwischenschicht sein oder die Folie weißt zusätzlich zur vakuolenhaltigen Basisschicht eine oder zwei vakuolenhaltige Zwischenschichten auf. Als Zwischenschicht ist die vakuolenhaltige Schicht im allgemeinen mindestens 5µm, vorzugsweise 7 bis 15µm dick.

Die Gesamtdicke der Folie liegt im allgemeinen in einem Bereich von 20 bis 100µm, vorzugsweise 25 bis 60 µm, insbesondere 30 bis 50µm.

In einer bevorzugten Ausführungsform umfaßt die Folie noch eine zusätzliche Schicht oder Schichten, die nicht vakuolenhaltig ist/sind. Diese zusätzliche/n Schicht oder Schichten ist beispielsweise eine zweite Deckschicht und/oder eine oder zwei zusätzliche Zwischenschichten. In einem besonderen Fall mit zwei vakuolenhaltigen Zwischenschichten kann die zusätzliche vakuolenfreie Schicht auch die Basisschicht der Folie sein. Aufbau und Zusammensetzung der zusätzlichen Schicht oder Schicht richtet sich nach der gewünschten Funktionalität, welche in die Folie eingebracht werden soll. Die Dicke der zusätzlichen Schicht als zweite Deckschicht beträgt im allgemeinen 0,5 - 3 µm, zusätzliche nicht-vakuolenhaltige Zwischenschicht haben im allgemeinen eine Dicke im Bereich von 1 bis 8 µm liegt..

Die zusätzliche/n nicht-vakuolenhaltigen Schicht/en enthalten im allgemeinen mindestens 80 Gew.-%, vorzugsweise 90 bis <100 Gew.% olefinische Polymere oder Mischungen daraus. Geeignete Polyolefine sind beispielsweise Polyethylene, Propylencopolymere und/oder Propylenterpolymere, sowie die bereits im Zusammenhang mit der vakuolenhaltigen Schicht beschriebenen Propylenhomopolymeren, sowie gegebenenfalls zusätzlich übliche Additive.

Geeignete Propylenco- oder Terpolymere sind im allgemeinen aus mindestens 50 Gew.-% Propylen und Ethylen und/oder Butyleneinheiten als Comonomer aufgebaut. Bevorzugte Mischpolymerisate sind statistische Ethylen-Propylen-Copolymere mit einem Ethylengehalt von 2 bis 10 Gew.-%, bevorzugt 5 bis 8 Gew.-%, oder statistische Propylen-Butylen-1-Copolymere mit einem Butylengehalt von 4 bis 25 Gew.-%, bevorzugt 10 bis 20 Gew.-%, je□weils bezogen auf das Gesamtgewicht des Copolymeren, oder statistische Ethylen-Propylen-Butylen-1-Terpolymere mit einem Ethylenge□halt von 1 bis 10 Gew.-%, bevorzugt 2 bis 6 Gew.-%, und einem Butylen-1-Gehalt von 3 bis 20 Gew.-%, bevor□zugt 8 bis 10 Gew.-%, jeweils bezogen auf das Gesamtgewicht des Terpo□lyme□ren. Diese Co- und Terpolymeren haben im allgemeinen einen Schmelzflußindex von 3 bis 15 g/10min, vorzugsweise 3 bis 9 g/10min (230°C, 21,6N DIN 53735) und einen Schmelzpunkt von 70 bis 145°C, vorzugsweise 90 bis 140°C (DSC).

Geeignete Polyethylene sind beispielsweise HDPE, MDPE, LDPE, LLDPE, VLDPE worunter HDPE und MDPE Typen besonders bevorzugt sind. Das HDPE hat im allgemeinen einen MFI (50N/190 C) von größer 0,1 bis 50g/10min, vorzugsweise 0,6 bis 20 g/10min, gemessen nach DIN 53 735 und eine Viskositätszahl, gemessen nach DIN 53728, Teil 4, oder ISO 1191, im Bereich von 100 bis 450cm³/g, vorzugsweise 120 bis 280cm³/g. Die Kristallinität beträgt 35 bis 80 %, vorzugsweise 50 bis 80%. Die Dichte, gemessen bei 23 C nach DIN 53479, Verfahren A, oder ISO 1183, liegt im Bereich von >0,94 bis 0,96 g/cm^{3.}. Der Schmelzpunkt, gemessen mit DSC (Maximum der Schmelzkurve, Aufheizgeschwindigkeit 20 C/min), liegt zwischen 120 und 140 C. Geeignetes MDPE hat im allgemeinen einen MFI (50 N/190 C) von größer 0,1 bis 50 g/10 min, vorzugsweise 0,6 bis 20 g/10min, gemessen nach DIN 53 735. Die Dichte, gemessen bei 23 C nach DIN 53479, Verfahren A, oder ISO 1183, liegt im Bereich von >0,925 bis 0,94 g/cm^{3.}. Der Schmelzpunkt, gemessen mit DSC (Maximum der Schmelzkurve, Aufheizgeschwindigkeit 20 C/min), liegt zwischen 115 und 130 C.

Zur Verbesserung der Optik, insbesondere des Weißgrades, können der oder den zusätzlichen nicht-vakuolenhaltigen Schichten/en die vorstehend für die Basisschicht beschriebenen Pigmente zugesetzt werden, insbesondere TiO2 in einer Menge von 2 bis 12 Gew.-%, vorzugsweise 3 bis 8 Gew.-% bezogen auf das Gewicht der Schicht.

Wie bereits erwähnt enthalten alle Schichten der Folie vorzugsweise Neutralisationsmittel und Stabilisatoren in jeweils wirksamen Mengen, sowie gegebenenfalls zusätzlich übliche Additive wie Gleitmittel, Antistatika oder Antiblockmittel.

Als Stabilisatoren können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxy□benzyl)benzol sind besonders vorteilhaft.

Neutralisationsmittel sind vorzugsweise Calciumstearat und/oder Calciumcarbonat und/oder synthetisches Dihydrotalcit (SHYT) einer mittleren Teilchengröße von höchstens 0,7 µm, einer absoluten Teilchengröße von kleiner 10 µm und einer spezifischen Oberfläche von mindestens 40 m²/g. Im allgemeinen werden Neutralisationsmittel in einer Menge von 50 bis 1000 ppm, bezogen auf die Schicht eingesetzt.

Geeignete Antiblockmittel sind anorganische Zusatzstoffe wie Siliciumdioxid, Calciumcarbonat, Magnesiumsili□cat, Aluminiumsilicat, Calciumphosphat und dergleichen und/oder unverträgliche Polymerisate wie Polymethylmethacrylat (PMMA) Polyamide, Polyester, Polycarbonate und dergleichen, bevorzugt werden Polymethylmethacrylat (PMMA), Siliciumdioxid und Calciumcarbonat. Die wirksame Menge an Antiblock□mittel liegt im Bereich von 0,1 bis 2 Gew.-%, vorzugsweise 0,1 bis 0,5 Gew.-%, bezogen auf die jeweilige Deckschicht. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Die vorstehend beschriebene Folie wird erfindungsgemäß einem geeigneten Verarbeitungsverfahren unterworfen in dem eine Elektronenstrahlhärtung zum Einsatz kommt. Die Folie kann beispielsweise bedruckt, kaschiert, laminiert, lackiert, beschichtet oder mit einem Kaltsiegelkleber versehen werden. Gegebenfalls können diese Verarbeitungsschritte auch miteinander kombiniert werden, beispielsweise zunächst eine Bedruckung mit anschließender Überlackierung. In diesen Verarbeitungsverfahren werden die zusätzlichen Schichten oder Folien auf der ersten siegelfähigen Deckschicht gegenüberliegenden Seite aufgebracht. Die Trocknung oder Aushärtung der Kleber, Lacke oder Beschichtungen erfolgt mittels eines Elektronenstrahlhärte-Verfahrens.

Die verarbeitete Folie kann als siegelfähige Folie zur Herstellung von Verpackungen eingesetzt werden. Die Folie zeigt trotz der Trocknung oder Härtung mittels Elektronenstahlen eine hervorragende Siegelung und ausgezeichnete Hot-Tack-Werte, die beim Befüllen eines Siegelrandbeutels wesentlich sind.

Geeignete Elektronenstrahlhärte Verfahren sind an sich bekannt und beispielsweise in dem folgenden Symposium Katalog beschrieben: I. Rangwalla ESI US Wilmington "Influence of Electron Beam on some Polymeric Substrates used in Flexible Packaging 29. Münchner Klebstoff und Veredlungssymposium 2004 beschieben (Seiten 7-13; 24-28; 29-34; 51-52, 113-116; 187- 195).

Die Erfindung betrifft weiterhin ein Verfahren zur Herstellung der erfindungsgemäßen Mehrschichtfolie nach dem an sich bekannten Coextrusionsverfahren, wobei insbesondere das Stenterverfahren bevorzugt ist.

Im Rahmen dieses Verfahrens werden die den einzelnen Schichten der Folie entsprechenden Schmelzen durch eine Flachdüse coextrudiert, die so erhaltene Folie zur Verfestigung auf einer oder mehreren Walze/n abgezogen, die Folie anschließend gestreckt (orientiert), die gestreck□te Folie thermofixiert und gegebenenfalls an der zur Behandlung vorgesehenen Oberflächenschicht plasma- corona- oder flammbehandelt.

Im Einzelnen wird hierbei wie beim Extrusionsverfahren üblich das Polymere bzw. die Polymermischung der einzelnen Schichten in einem Extruder komprimiert und verflüssigt, wobei die vakuoleninitierenden Füllstoffe und andere gegebenen□falls zugesetzte Additive bereits im Polymer bzw. in der Polymermischung enthalten sein können. Alternativ können diese Zusatzstoffe auch über ein Masterbatch eingearbeitet werden.

Die Schmelzen werden dann gemeinsam und gleichzeitig durch eine Flachdüse (Breitschlitzdüse) gepreßt, und die aus□gepreßte mehrschichtige Folie wird auf einer oder mehreren Abzugs□walzen bei einer Temperatur von 5 bis 100 C, vorzugsweise 10 bis 50°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 80 bis 150 °C zweckmäßigerweise mit Hilfe zweier entsprechend dem angestrebten Streckverhältnis verschieden schnellaufender Walzen durchführen und das Querstrecken vorzugsweise bei einer Temperatur von 120 bis 170°C mit Hilfe eines entsprechenden Kluppenrahmens. Die Längsstreckverhältnisse liegen im Bereich von 4 bis 8 vorzugsweise 4,5 bis 6. Die Querstreckverhältnisse liegen im Bereich von 5 bis 10, vorzugsweise 7 bis 9.

An die Streckung der Folie schließt sich ihre Thermofixierung (Wärmebe□hand□lung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden plasma-, corona- oder flammbehandelt. Die Behandlungsintensität liegt im allgemeinen im Bereich von 35 bis 50 mN/m, vorzugsweise 37 bis 45 mN/m, insbesondere 39 bis 40mN/m.

Zur Charakterisierung der Rohstoffe und der Folien wurden die folgenden Meßmethoden benutzt:

Schmelzflußindex

Der Schmelzflußindex wurde nach DIN 53 735 bei 21,6 N Belastung und 230 °C gemessen.

Dichte

Die Dichte wird nach DIN 53 479, Verfahren A, bestimmt.

Oberflächenspannung

Die Oberflächenspannung wurde mittels Tintenmethode nach DIN 53 364 bestimmt.

Hot-Tack
"Hot-Tack" bezeichnet die Festigkeit einer noch heißen Siegelnaht unmittelbar nach dem Öffnen der Siegelwerkzeuge. Zur Bestimmung werden zwei Folienzuschnitte von 530 mm übereinandergelegt und an den Enden mit einem Klammergewicht G von 100 g fixiert. Ein Flachspatel wird zwischen die Folienlagen gesteckt, und der Messstreifen wird über zwei Umlenkrollen zwischen die Siegelbacken geführt. Anschließend wird die Siegelung ausgelöst, wobei der Spatel zwischen den Lagen herausgezogen wird, sobald die Siegelbacken geschlossen sind. Als Siegelbedingungen werden 150°C für die Siegeltemperatur, 0,5 s für die Siegelzeit und 30 N/cm2 für den Anpressdruck eingestellt. Nach Ende der Siegelzeit von 0,5 s öffnen sich die Siegelbacken (Fläche: 20 cm2) selbständig, und der gesiegelte Messstreifen wird durch das Belastungsgewicht ruckartig bis zur Umlenkrolle vorgezogen und dabei unter einem Trennwinkel von 180° gespalten. Als Hot-Tack wird die Tiefe der Delaminierung der Siegelnaht in mm angegeben, die sie bei der vorgegebenen Krafteinwirkung erfährt.

Die Erfindung wird nunmehr durch die nachfolgenden Beispiele erläutert.

Beispiel 1:

Nach dem Coextrusionsverfahren wurde aus einer Breitschlitzdüse bei einer Extrusionstemperatur von 240 bis 270°C eine fünfschichtige Vorfolie extrudiert. Diese Vorfolie wurde zunächst auf einer Kühlwalze abgezogen und abgekühlt. Anschließend wurde die Vorfolie in Längs- und Querrichtung orientiert und abschließend fixiert. Die Oberfläche der zweiten Deckschicht wurde mittels Corona zur Erhöhung der Oberflächenspannung vorbehandelt. Die fünfschichtige Folie hatte einen Schichtaufbau erste Deckschicht/erste Zwischenschicht/Basisschich□t/zweite Zwischenschicht /zweite Deckschicht. Die einzelnen Schichten der Folie hatten die folgende Zusammensetzung:

Erste Deckschicht (0,5 µm):

99,7 Gew.-% Propylen-Butylencopolymerisat mit einem Butylen-Anteil von 4 Gew.-% (bezogen auf das Copolymer) und einem Schmelzpunkt von 136°C; und einem Schmelzflußindex von 7,3 g/10 min bei 230 °C und 2,16 kg Belastung (DIN 53 735)

0,1 Gew.-% Antiblockmittel mit einem mittleren Teilchendurchmesser ca. 4µm (Sylobloc 45)

Erste Zwischenschicht ,5µm)

~100 Gew.% Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung (DIN 53 735)

Basisschicht: (29,5µm)

91,6 Gew.-% Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung (DIN 53 735) und

6,0 Gew.-% Calciumcarbonat, mittlerer Teilchendurchmesser ca. 2,7 µm

2,4 Gew.-% Titandioxid mittlerer Teilchendurchmesser von 0,1 bis 0,3 µm

Zweite Zwischenschicht (4µm)

96,4 Gew.-% Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung (DIN 53 735) und

3,6 Gew.-% Titandioxid mittlerer Teilchendurchmesser von 0,1 bis 0,3 µm

Zweite Deckschicht (1,0 µm):

99,7 Gew.-% Ethylen-Propylencopolymerisat mit einem Ethylen-Anteil von 4 Gew.-% (bezogen auf das Copolymer) und einem Schmelzpunkt von 136°C; und einem Schmelzflußindex von 7,3 g/10 min bei 230 °C und 2,16 kg Belastung (DIN 53 735) und einer Schmelzeenthalpie von 64,7 J/g

0,1 Gew.-% Antiblockmittel mit einem mittleren Teilchendurchmesser ca. 4µm (Sylobloc 45)

Alle Schichten der Folie enthielten zusätzlich Stabilisator und Neutralisationsmittel in üblichen Mengen.

Im einzelnen wurde die folgenden Bedingungen und Temperaturen bei der Herstellung der Folie gewählt:

Extrusion: Extrusionstemperatur ca. 250 -270°C

Abkühlwalze: Temperatur 30°C,

Längsstreckung: T = 120 °C

Längsstreckung um den Faktor 5

Querstreckung: T = 160 °C

Querstreckung um den Faktor 9

Fixierung T = 100°C

Die Folie wurde auf der Oberfläche der zweiten Deckschicht mittels Corona oberflächenbehandelt und wies eine Oberflächenspannung von 38mN/m auf. Die Folie hatte eine Dicke von 40 µm und ein opakes Aussehen.

Vergleichsbeispiel 2

Es wurde eine opake Folie nach Beispiel 1 hergestellt. Im Unterschied zu Beispiel 1 wurde der Basisschicht kein CaCo3 zugesetzt, der Anteil an Propylenhomopolymer entsprechend erhöht. Die Folie hatte eine Dichte von 0,96cm³; eine Dicke von 30..µm und ein weißes Aussehen.

Vergleichsbeispiel 3

Es wurde eine Folie wie in Beispiel 1 beschrieben hergestellt. Im Unterschied zu Beispiel 1 wurde keiner Schicht TiO2 oder CaCO3 zugesetzt. Auf diese Weise wurde eine transparente Folie mit einer Dichte von 0,9 g/cm³ erhalten

Alle Folien nach den Beispielen und den Vergleichsbeispielen wurden auf der Oberfläche der zweiten Deckschicht mit einer lösemittelfreien Beschichtung (Details) versehen, die mittels Elektronenbestrahlung ausgehärtet wurde. Die Elektronenbestrahlung wurde mit schrittweise erhöhten Dosierungen von 5 bis 30 kGy durchgeführt. Anschließend wurde der Hot-Tack und die Siegelung der ersten Deckschichten in einem Temperaturbereich von 80 bis 140°C bestimmt.

Es zeigte sich, daß die Hot-Tack Werte nur bei der opaken erfindungsgemäßen Folie mit Vakuolen nahezu konstant bleibt. Es tritt nur eine marginale Beeinträchtigung des Hot-Tacks bei steigender Dosierung auf. Die weißen oder transparenten Folien nach VB2 und VB3 zeigen mit steigender Belastung der Folie bei höheren Siegeltemperaturen eine immer weiter zunehmende Verschlechterung des Hot-Tacks. Die erfindungsgemäße opake Folie kann somit sehr variabel in den ESH Verfahren ohne Beeinträchtigung des Hot Tacks eingesetzt werden. Die Folie kann nach der Elektronenstrahlbehandlung weiterhin in einem sehr großen Temperaturbereich gesiegelt werden und zeigt von 90 - 140°C stabile und gute Hot-Tack Werte. Bei den transparenten und weißen Folien ist die Siegelschicht durch die Bestrahlung geschädigt. Diese Schädigung nimmt mit steigender Intensität der Elektronenstrahlen zu, so daß diese Folie entweder nur mit nieder energetischen Elektronen bestrahlt werden könne oder ein sehr enges Verarbeitungsfenster in Kauf genommen werden muß. Die Folie zeigt dann nur noch bei Siegeltemperaturen von ca. 120°C einen akzeptablen Hot-Tack, der gegenüber der unbehandelten Folie nur wenig verschlechtert ist.

## Patentansprüche

1. Verwendung einer coextrudierten mehrschichtigen, biaxial orientierten Polypropylenmehrschichtfolie, welche mindestens eine erste siegelfähige Deckschicht und mindestens eine vakuolenhaltige Schicht mit einer Dicke von mindestens 5µm aufweist, wobei die Folie aus coextrudierten Schichten mittels Laminierung, Kaschierung, Bedruckung, Lackierung und/oder Beschichtung weiterverarbeitet ist, **dadurch gekennzeichnet, dass** die Trocknung oder Härtung bei der Weiterverarbeitung mittels Elektronenstrahlhärtung erfolgt und die vakuolenhaltige Schicht eine Dicke von mindestens 5µm aufweist und die Folie in einem VFFS Verfahren verwendet wird.

2. Verwendung nach Anspruch 1, **dadurch gekennzeichnet, daß** die vakuolenhaltige Schicht die Basisschicht der Folie ist.

3. Verwendung nach Anspruch 2, **dadurch gekennzeichnet, daß** die Folie zusätzlich eine oder zwei vakuolenhaltige Zwischenschicht/en aufweißt.

4. Verwendung nach Anspruch 1, **dadurch gekennzeichnet, dass** die Folie eine oder zwei vakuolenhaltige Zwischenschicht/en und eine Basisschicht ohne Vakuolen aufweist.

5. Verwendung nach einem der Ansprüche 1 bis 4, **dadurch gekennzeichnet, daß** die siegelfähige erste Deckschicht mindestens 80 Gew.-% siegelfähige olefinische Polymer aufweist.

6. Verwendung nach einem der Anspruch 2, **dadurch gekennzeichnet, daß** die Folie eine oder mehrere zusätzliche coextrudierte Schicht/en Schicht ohne Vakuolen aufweist.

7. Verwendung nach Anspruch 6, **dadurch gekennzeichnet, dass** die zusätzliche Schicht oder Schichten eine zweite Deckschicht und/oder eine oder zwei Zwischenschichten ist/sind.

8. Verwendung nach einem der Ansprüche 1 bis 7, **dadurch gekennzeichnet, daß** die vakuolenhaltige Schicht aus Propylenhomopolymer aufgebaut ist und 2 bis 15 Gew.-% vakuoleninitierende Füllstoffe enthält und die Folie eine Dichte von 0,45 - 0,85 cm³/g aufweist.

## Claims

1. Use of a co-extruded, multilayer and biaxially-oriented polypropylene multilayer film, which features at least one first sealable covering layer and at least one vacuolate layer having a thickness of at least 5 µm, wherein the film of co-extruded layers is further treated by laminating, pasting, printing, varnishing and/or coating, **characterised in that** drying or curing is effected during further processing by means of electron-beam curing, and the vacuolate layer has a thickness of at least 5 µm and the film is used in a VFFS process.

2. The use according to claim 1, **characterised in that** the vacuolate layer is the base layer of the film.

3. The use according to claim 2, **characterised in that** the film also has one or two vacuolate intermediate layer/s.

4. The use according to claim 1, **characterised in that** the film has one or two vacuole-containing layer/s and one base layer without vacuoles.

5. The use according to any of claims 1 to 4, **characterised in that** the sealable first covering layer includes at least 80% by weight sealable olefin polymer.

6. The use according to claim 2, **characterised in that** the film has one or more additional co-extruded layer/s without vacuoles.

7. The use according to claim 6, **characterised in that** the additional layer or layers is/are a second covering layer and/or one or two intermediate layers.

8. The use according to any of claims 1 to 7, **characterised in that** the vacuole-containing layer is constructed from propylene homopolymer and contains 2 to 15% by weight vacuole-initiating filler materials, and the foil has a density from 0.45 - 0.85 cm³/g.

## Revendications

1. Utilisation d'un film multicouches en polypropylène co-extrudé multicouches à orientation biaxiale, lequel comporte au moins une première couche de couverture scellable et au moins une couche contenant des vacuoles, d'une épaisseur d'au moins 5µm, le film en couches co-extrudées étant traité ultérieurement par laminage, contrecollage, impression, laquage et/ou revêtement, **caractérisée en ce que** le séchage ou le durcissement lors du traitement ultérieur s'effectue par séchage par faisceau d'électrons et la couche contenant des vacuoles présente une épaisseur d'au moins 5 µm et le film est utilisé dans un procédé VFFS.

2. Utilisation selon la revendication 1, **caractérisée en ce que** la couche contenant des vacuoles est la couche de base du film.

3. Utilisation selon la revendication 2, **caractérisée en ce que** le film comporte en supplément une ou deux couche(s) contenant des vacuoles.

4. Utilisation selon la revendication 1, **caractérisée en ce que** le film comporte une ou deux couche(s) contenant des vacuoles et une couche de base sans vacuole.

5. Utilisation selon l'une quelconque des revendications 1 à 4, **caractérisée en ce que** la première couche de couverture scellable comporte au moins 80 % en poids de polymère oléfinique scellable.

6. Utilisation selon la revendication 2, **caractérisée en ce que** le film comporte une ou plusieurs couches co-extrudée(s) supplémentaire(s) sans vacuole.

7. Utilisation selon la revendication 6, **caractérisée en ce que** la ou les couche(s) supplémentaire(s) est/sont une deuxième couche de couverture et/ou une ou deux couche(s) intermédiaire(s).

8. Utilisation selon l'une quelconque des revendications 1 à 7, **caractérisée en ce que** la couche contenant des vacuoles est constituée d'un homopolymère de propylène et contient de 2 à 15 % en poids d'agents de charge initiant des vacuoles et **en ce que** le film présente une densité de 0,45 à 0,85 cm³/g.
